# EUROPÄISCHE PATENTSCHRIFT

(11) **EP 2 051 093 B1**
(45) Veröffentlichungstag und Bekanntmachung des Hinweises auf die Patenterteilung: **04.12.2013**
(21) Anmeldenummer: 08018014.4
(22) Anmeldetag: 15.10.2008
(51) Int. Cl.: G01S 19/20, G01S 19/08

(54) **Verfahren und Vorrichtung zur Integritätsüberwachung von Satellitennavigationssignalen**
Method and device for monitoring the integrity of satellite navigation signals
Procédé et dispositif destinés à la surveillance de l'intégrité de signaux de navigation par satellite

(30) Priorität: 17.10.2007 DE 102007050034
(43) Veröffentlichungstag der Anmeldung: 22.04.2009
(73) Patentinhaber: Astrium GmbH, 82024 Taufkirchen (DE)
(72) Erfinder: Trautenberg, Hans L., 85521 Ottobrunn (DE)
(74) Vertreter: Hummel, Adam

(56) Entgegenhaltungen:
- PAOLO D'ANGELO AND ANTONIO FERNANDEZ: "GNSS Multi-System Integrity Algorithm Definition and Evaluation" PROCEEDINGS OF ION GNSS 2007, FORT WORTH, TEXAS , USA, 25. September 2007 (2007-09-25), Seiten 3057-3063, XP002505281
- PECCHIONI C ET AL: "Combined GALILEO and EGNOS Integrity Signal: a multisystem integrity algorithm" PROCEEDINGS OF GNSS SIGNAL 2007, NOORDWIJK, THE NEDERLANDS, 24. April 2007 (2007-04-24), Seiten 1-11, XP002505280
- OBER P B ET AL: "SBAS Integrity Verification" ION GPS/GNSS, XX, XX, 11. September 2001 (2001-09-11), Seiten 1805-1830, XP002397832
- ZINK T ET AL: "Analyses of Integrity Monitoring Techniques for a Global Navigation Satellite System (GNSS-2)" ION ANNUAL MEETING, XX, XX, 26. Juni 2000 (2000-06-26), Seiten 117-127, XP002343913

## Beschreibung

Die Erfindung betrifft ein Verfahren zur Integritätsüberwachung von Satellitennavigationssignalen gemäß Anspruch 1 und eine entsprechende Vorrichtung gemäß Anspruch 4.

Satellitensysteme zur weltweiten Navigation (GNSS; GNSS = Global Navigation Satellite System) werden zur Positionsbestimmung und Navigation auf der Erde, auf dem Wasser und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System, ein mit einer zentralen Berechnungsstation verbundenes erdfestes Empfangseinrichtungs-System sowie Nutzungssysteme auf, welche die von den Satelliten per Funk übermittelten Satellitensignale insbesondere zur Navigation auswerten und nutzen.

In einem GNSS erfordert eine genaue Detektion der Position eines Nutzers sowohl lokale als auch globale Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Bekannte Integritätskonzepte sind das von Galileo, vom Wide Area Augmentation System (WAAS) und European Geostationary Navigation Overlay Service (EGNOS). Insbesondere beim Integritätskonzept von Galileo gehen derzeit Beobachtungen nur für die Beurteilung der Integrität eines Satellitennavigationssignals beim Verlassen des Phasenzentrums der Satellitensendeantenne ein. Alle anderen Fehlerquellen werden für die Integrität durch globale Modelle abgedeckt, die zwangsläufig sehr konservativ sein müssen, um möglichst zuverlässige bzw. integre Satellitennavigationssignale zu erhalten. Gerade aufgrund dieser Konservativität der globalen Modelle wird jedoch die Leistungsfähigkeit des Integritätssystems eines GNSS wie Galileo wesentlich durch die Leistungsfähigkeit dieser globalen Modelle bestimmt, und insbesondere beschränkt.

Die Veröffentlichung "SBAS Integrity Verification" ION GPS/GNSS, 11.-14. September 2001 (2001-09-11), Seiten 1805-1830, diskutiert ein Integritätskonzept für ein SBAS (Satellite Based Augmentation System) und beschreibt insbesondere das Konzept des "overbounding" für Fehler, deren Verteilung nicht der Gaussschen Normalverteilung entspricht, wie beispielsweise aufgrund von Mehrwegeempfang verursachte Fehler. Um solche Fehler auch mit einer SBAS-Integritätsgleichung verarbeiten zu können, wird vorgeschlagen, ein "Overbounding" der Verteilung dieser Fehler mit einer konservativen Gaussschen Normalverteilung einzuführen. Wie oben erwähnt kann jedoch durch dieses konservative Modell des "Overbounding" die Leistungsfähigkeit eines GNSS beschränkt werden.

Aus der Veröffentlichung "GNSS Multi-System Integrity Algorithm Definition and Evaluation", PAOLO D'ANGELO AND ANTONIO FERNANDEZ, PROCEEDINGS OF ION GNSS 2007, FORT WORTH, TEXAS , USA, 25. September 2007 (2007-09-25), Seiten 3057-3063, ist ein Algorithmus bekannt, der eine Verbindung von zwei verschiedenen Generationen von GNSS etabliert, indem verschiedene Schemas zur Integritätsüberwachung kombiniert werden. Konkret werden Galileo und EGNOS zum Definieren eines neuen GNSS-Integritätskonzepts betrachtet. Der Algorithmus wird durch ein RAIM (Receiver Autonomous Integrity Monitoring)-Schema vervollständigt, das mit einer Crosscheck-Funktion implementiert ist. Dieser Algorithmus ist auch in der Veröffentlichung "Combined GALlLEO and EGNOS Integrity Signal: a multisystem integrity algorithm", PECCHIONI C ET AL,PROCEEDINGS OF GNSS SIGNAL 2007, NOORDWIJK, THE NEDERLANDS, 24. April 2007 (2007-04-24), Seiten 1-11, beschrieben.

Aufgabe der vorliegenden Erfindung ist es daher, ein verbessertes Verfahren und eine verbesserte Vorrichtung zur Integritätsüberwachung von Satellitennavigationssignalen zu schaffen.

Diese Aufgabe wird durch ein Verfahren zur Integritätsüberwachung von Satellitennavigationssignalen mit den Merkmalen von Anspruch 1 und eine entsprechende Vorrichtung mit den Merkmalen von Anspruch 4 gelöst. Weitere Ausgestaltungen der Erfindung sind Gegenstand der abhängigen Ansprüche.

Ein wesentlicher Gedanke der Erfindung besteht darin, verschiedene Erkennungsmechanismen für Integritätsprobleme kombiniert einzusetzen, um so einerseits verbesserte Integritätsdienste anbieten zu können, und andererseits die Leistungsfähigkeit eines GNSS verbessern zu können. Integritätsprobleme, die mit einem Erkennungsmechanismus bereits detektiert wurden, können gemäß der Erfindung bei der Leistungsfähigkeitsberechnung eines nachfolgend ausgeführten Erkennungsmechanismus für Integritätsprobleme mit einer geringeren Wahrscheinlichkeit berücksichtigt werden. Dies ermöglicht es, die Anforderungen an den nachfolgend ausgeführten Erkennungsmechanismus zu reduzieren und hierdurch die Leistungsfähigkeit eines GNSS gleich zu halten oder zu verbessern. Alternativ kann auch die Leistungsfähigkeit des nachfolgend ausgeführten Erkennungsmechanismus gleich bleiben und aufgrund der kombinierten Erkennungsmechanismen ein hochwertigerer, insbesondere genauerer Integritätsdienst angeboten werden. Insgesamt ermöglicht die Erfindung eine verbesserte Integritätsüberwachung als es mit den eingangs geschilderten bekannten Integritätskonzepten möglich ist.

Gemäß einer Ausführungsform der Erfindung ist nun ein Verfahren zur Integritätsüberwachung von Satellitennavigationssignalen mit den folgenden Schritten vorgesehen:
erstes Erkennen von Integritätsproblemen, indem an verschiedenen Orten dieselbe Instanz eines Navigationssignals von einem bestimmten Satelliten empfangen wird und die empfangenen Instanzen ausgewertet werden um den Fehlern auf den Signalen und optional den Fehler bei der Fehlerbestimmung abzuschätzen und zu charakterisieren um dann schließendlich diese Information zusammen mit anderer Information zum Ermitteln des Integritätsrisikos zu verwenden;
zweites Erkennen von Integritätsproblemen, indem eine oder mehrere Messungen eines oder mehrerer empfangener Navigationssignale von einem bestimmten Satelliten durchgeführt werden und die mindestens eine Messung ausgewertet wird um den Fehlern auf den Signalen und optional den Fehler bei der Fehlerbestimmung abzuschätzen und zu charakterisieren um dann schließendlich diese Information zusammen mit anderer Information zum Ermitteln des Integritätsrisikos zu verwenden, wobei dieser Schritt für alle an der Positionslösung beteiligenden Signale durchgeführt wird; und anschließend
drittes Erkennen von Integritätsproblemen, indem Messungen von mehreren Navigationssignalen von verschiedenen Satelliten durchgeführt und die Messungen ausgewertet werden zum Ermitteln des Integritätsrisikos, wobei Integritätsprobleme, die bereits beim ersten und zweiten Erkennen erkannt werden können, nur mit der Wahrscheinlichkeit berücksichtigt werden, dass sie beim dritten Erkennen auftreten und beim ersten und zweiten Erkennen nicht entdeckt worden sind.

Das erste und zweite Erkennen muss hierbei nicht zwingend aufeinander folgen, sondern können auch in umgekehrter Reihenfolge ausgeführt werden oder ein schritt auch ganz weggelassen werden.

Gemäß einer Ausführungsform der Erfindung kann das erste Erkennen von Integritätsproblemen immer dann durchgeführt werden, wenn eine Instanz eines Navigationssignals von einem bestimmten Satelliten von unterschiedlichen Beobachtungsstationen eines Satellitennavigationssystems empfangen wird. In diesem Fall kann sichergestellt werden, dass immer dieselbe Navigationssignalinstanz vom ersten Erkennungsmechanismus verarbeitet wird. Eine Modellierung des Fehlerverhaltens, wie es beispielsweise beim derzeitigen Galileo-Konzept erforderlich ist, da zu einem Zeitpunkt an einer Beobachtungsstation bei Galileo alle Signale zu Satelliten gemessen werden, so dass unterschiedliche Beobachtungsstationen unterschiedliche Signalinstanzen messen, kann dadurch bei dieser Ausführungsform der Erfindung entfallen.

Das zweite Erkennen kann gemäß einer weiteren Ausführungsform der Erfindung eine Prozessierung auf Signalebene der mindestens einen Messung in einem Empfänger für Satellitennavigationssignale umfassen. Insbesondere durch eine geschickte Prozessierung auf Signalebene eines einzelnen oder mehrerer Signale von einem bestimmten Satelliten können Fehler mit dem zweiten Erkennungsmechanismus effizient erkannt werden.

Die Erfindung betrifft weiterhin gemäß einer Ausführungsform eine Vorrichtung zur Integritätsüberwachung von Satellitennavigationssignalen, die folgendes umfasst:
erste Erkennungsmittel zum ersten Erkennen von Integritätsproblemen, wobei die ersten Erkennungsmittel ausgebildet sind, an verschiedenen Orten dieselbe Instanz eines Navigationssignals von einem bestimmten Satelliten zu empfangen und die empfangenen Instanzen auszuwerten um Informationen bereitzustellen, die schließendlich zum Ermitteln des Integritätsrisikos verwendet werden können;
zweite Erkennungsmittel zum zweiten Erkennen von Integritätsproblemen, wobei die zweiten Erkennungsmittel ausgebildet sind, eine oder mehrere Messungen eines oder mehrerer empfangener Navigationssignale von einem bestimmten Satelliten durchzuführen und die mindestens eine Messung auszuwerten um Informationen bereitzustellen, die schließendlich zum Ermitteln des Integritätsrisikos verwendet werden können; und
dritte Erkennungsmittel zum dritten Erkennen von Integritätsproblemen, wobei die dritten Erkennungsmittel ausgebildet sind, Messungen von mehreren Navigationssignalen von verschiedenen Satelliten durchzuführen und die Messungen auszuwerten zum Ermitteln des Integritätsrisikos, und wobei die dritten Erkennungsmittel ferner derart ausgebildet sind, dass Integritätsprobleme, die bereits beim ersten und zweiten Erkennen erkannt werden können, nur mit der Wahrscheinlichkeit berücksichtigt werden, dass sie beim dritten Erkennen auftreten und beim ersten und zweiten Erkennen nicht entdeckt worden sind. Mit einer derartigen Vorrichtung kann eine verbesserte Integritätsüberwachung bei einem Satellitennavigationssystem geschaffen werden.

Die ersten Erkennungsmittel können gemäß einer Ausführungsform der Erfindung in verschiedenen Beobachtungsstationen für Satellitennavigationssignale implementiert sein. Beispielsweise können die Beobachtungsstationen eines erdfesten Empfangssystems für Satellitennavigationssignale die ersten Erkennungsmittel umfassen. Die ersten Erkennungsmittel können insbesondere zumindest teilweise als Computerprogramm implementiert sein.

Jede Beobachtungsstation kann ferner gemäß einer Ausführungsform der Erfindung derart ausgebildet sein, dass sie beim Empfangen derselben Instanz des Navigationssignals vom bestimmten Satelliten die Instanz ausgewertet und die Auswertung an eine zentrale Prozessierungsstelle übermittelt wird. Wie bereits oben erläutert kann dadurch sichergestellt werden, dass immer dieselbe Navigationssignalinstanz ausgewertet wird. Die Auswertung kann auch erst in der zentralen Prozessierungsstelle erfolgen. Die zentrale Prozessierungsstelle ist insbesondere zur Verarbeitung von Signalen der einzelnen Beobachtungsstationen und zur koordinierten Steuerung eines Satellitennavigationssystems vorgesehen. Beispielsweise kann die zentrale Prozessierungsstelle dazu dienen, Integritätswarnungen im Satellitennavigationssystem zu erzeugen und zu verteilen.

Die zweiten Erkennungsmittel können gemäß einer weiteren Ausführungsform der Erfindung in einem Empfänger für die Satellitennavigationssignale, insbesondere einer zentralen Prozessierungsstelle für Satellitennavigationssignale oder auch alternativ in jedem Benutzerempfänger, implementiert sein.

Weiterhin können gemäß einer Ausführungsform der Erfindung die zweiten Erkennungsmittel ausgebildet sein, die Auswertung der mindestens einen Messung des empfangenen Navigationssignals vom bestimmten Satelliten durch eine Prozessierung auf Signalebene durchzuführen.

Gemäß einer weiteren Ausführungsform der Erfindung können die dritten Erkennungsmittel in einem Empfänger für die Satellitennavigationssignale, insbesondere einer zentralen Prozessierungsstelle für Satellitennavigationssignale oder alternativ im Benutzerempfänger, implementiert sein.

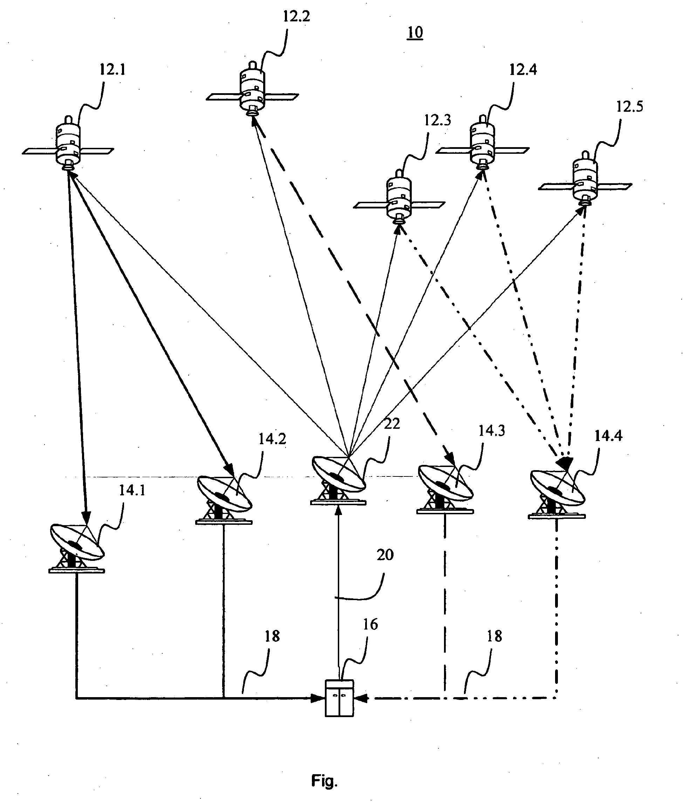

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel. Die einzige Zeichnung zeigt in der Fig. eine Vorrichtung zur Integritätsüberwachung von Satellitennavigationssignalen gemäß einem Ausführungsbeispiel der vorliegenden Erfindung.

Im Folgenden können gleiche und/oder funktional gleiche Elemente mit den gleichen Bezugszeichen versehen sein.

In der Fig. Ist ein Satellitennavigationssystem 10 mit mehreren Satelliten 12.1 bis 12.5 sowie einem Netzwerk von Beobachtungsstationen 14.1 bis 14.4 dargestellt. Das Netzwerk der Beobachtungsstationen 14.1 bis 14.4 bildet zusammen mit einer zentralen Prozessierungsstelle 16 für Beobachtungen der Beobachtungsstationen 14.1 bis 14.4 eine erdfeste Empfangseinrichtung für die von den Satelliten 12.1 bis 12.5 ausgesandten Satellitensignale, die Parameter des aussendenden Satelliten aufweisen wie die Uhrzeit der hochgenauen Uhr des Satelliten zum Zeitpunkt des Aussendens des Signals, eine eindeutige Satellitenkennung, Daten zum Orbit des Satelliten, Integritätswarnungen und weitere Informationen, die insbesondere für die Positionsbestimmung durch das Satellitennavigationssystem 10 wesentlich sind.

Das Satellitennavigationssystem 10 ist für die Nutzung durch Nutzungssysteme ausgelegt, die beispielsweise mobile Navigationsgeräte sind. Ein Nutzungssystem wertet empfangene Satellitensignale bekanntermaßen zum Feststellen der Position des Nutzungssystems aus. Sofern ein Signal eines bestimmten Satelliten eine Integritätswarnung enthält, weiß das Nutzungssystem, dass dieses Signal nicht für eine exakte Positionsbestimmung geeignet ist.

Der Integritätsmechanismus in einem Satellitensystem 10 wie beispielsweise Galileo erfordert eine entsprechende Bodeninfrastruktur zum Feststellen von fehlerhaften Satellitensignalen. Die Integritätsüberwachung erfolgt insbesondere durch eine Auswertung der von den Beobachtungsstationen 14.1 bis 14.4 empfangenen Satellitennavigationssignale in der zentralen Prozessierungsstelle 16. Die zentrale Prozessierungsstelle 16 erzeugt im Falle von fehlerhaften Satellitennavigationssignalen entsprechende Integritätswarnsignale 20, die über eine Sendeantenne 22 an die Satelliten 12.1 bis 12.5 übermittelt werden (angedeutet durch gepunktete dünne Pfeile), um von den Satelliten 12.1 bis 12.5 wiederum an Nutzungssysteme übermittelt zu werden. Eine zuverlässige und effiziente Integritätsüberwachung im Satellitennavigationssystem 10 wird nun erfindungsgemäß wie folgt gewährleistet:

Das Integritätsproblem eines Satellitennavigationssystems kann in drei Klassen von Integritätsproblemen aufgeteilt werden, die mit drei verschiedenen Erkennungsmechanismen 1 bis 3 detektiert werden können:
1. Eine erste Klasse von Integritätsproblemen hat für alle Benutzer, d.h. Nutzungssysteme wie mobile Navigationsgeräte, die gleiche Ursache. Derartige Integritätsprobleme können am besten durch Beobachtungen ein und derselben Instanz eines Satellitennavigationssignals von verschiedenen Orten beobachtet und dann durch gemeinsames Auswerten all dieser Beobachtung erkannt werden. Typische Beispiele für Ursachen oder Auslöser derartiger Integritätsprobleme sind zum Beispiel Fehler beim Erzeugen eines Satellitennavigationssignals, Uhrfehler in einem Satelliten, Bahn- und Lagefehler eines Satelliten.
   In der Fig. Ist das Erkennen dieser ersten Klasse von Integritätsproblemen durch Beobachten der Signale eines einzelnen Satelliten 12.1 durch fett gedruckte und durchgehende Linien angedeutet. Dieselbe Signalinstanz vom Satelliten 12.1 wird hierzu von zwei Beobachtungsstationen 14.1 und 14.2 gemessen, und die Messungen werden von den Beobachtungsstationen 14.1 und 14.2 an die zentrale Prozessierungsstelle 16 zur Auswertung übermittelt. Wesentlich ist hierbei, dass dieselbe gemessene Instanz eines Satellitennavigationssignals, die von den verschiedenen Beobachtungsstationen 14.1 und 14.2 an verschiedenen Orten empfangen wurde, von der zentralen Prozessierungsstelle 16 empfangen und verarbeitet wird. Dadurch lassen sich mit hoher Wahrscheinlichkeit Signalfehler ermitteln, welche die gleiche Ursache haben, also beispielsweise die bereits erwähnten Signalerzeugungsfehler im Satelliten, eine ungenaue Uhr im Satelliten et cetera. In der zentralen Prozessierungsstelle 16 können Integritätsprobleme dieser ersten Klasse ermittelt und bei der weiteren Verarbeitung, insbesondere bei der Erzeugung von Integritätswarnsignalen, berücksichtigt werden. Das erste Erkennen von Integritätsproblemen erster Klasse kann ausschließlich in der zentralen Prozessierungsstelle 16 erfolgen, oder die Erkennung kann auf Beobachtungsstation 14.1 oder 14.2 und zentrale Prozessierungsstelle 16 aufgeteilt sein. Es können natürlich auch mehr als zwei Bobachtungsstationen an diesem Prozess beteiligt sein.
2. Eine zweite Klasse von Integritätsproblemen haben für unterschiedliche Benutzer unterschiedliche Ursachen. Diese Probleme können durch eine oder mehrere Messungen eines oder mehrerer Navigationssignale eines einzigen Satelliten erkannt werden. Diese Probleme treten beispielsweise aufgrund von ionosphärischen Effekten, Mehrwegeausbreitung, Störungen oder manchmal auch Täuschungen eines Satellitennavigationssignals auf. Die Erkennung solcher Fehler kann durch geschickte Prozessierung auf Signalebene der einzelnen Signale der einzelnen Satelliten oder durch Prozessierung von mehreren Signalen von einem einzelnen Satelliten in einem Empfänger für Satellitennavigationssignale erreicht werden.
   In der Fig. ist das Erkennen dieser zweiten Klasse von Integritätsproblemen durch Beobachten der Signale eines einzelnen Satelliten 12.2 durch die fett gedruckten und gestrichelten Linien angedeutet. Die Signale des bestimmten Satelliten 12.2 werden hierzu von einer Beobachtungsstation 14.3, die als Empfänger agiert, gemessen. Die Messungen werden an die zentrale Prozessierungsstelle 16 übermittelt, die sie auf Signalebene auswertet, um Signalfehler beispielsweise aufgrund von Störungen auf dem Übertragungsweg von Satellit 12.2 zur Beobachtungsstation 14.3 zu erkennen. Auch hier kann das zweite Erkennen von Integritätsproblemen zweiter Klasse ausschließlich in der zentralen Prozessierungsstelle 16 erfolgen, oder die Erkennung kann auf die Beobachtungsstation 14.3 und zentrale Prozessierungsstelle 16 aufgeteilt sein, oder das Erkennen kann auch nur im Benutzerempfänger durchgeführt werden. Wird die Erkennung im Benutzerempfänger durchgeführt, so ist keine Kommunikation für die Erkennung von Problemen der zweiten Klasse nötig, was den Bau und den Betrieb des Systems vereinfacht.
3. Schließlich kann eine dritte Klasse von Integritätsproblemen für unterschiedliche Benutzer unterschiedliche Ursachen haben, aber nicht durch Messungen an Signalen zu einzelnen Satelliten erkannt werden. Diese Klasse von Integritätsproblemen kann nur durch eine oder mehrere Messungen der Navigationssignale verschiedener Satelliten 12.3 bis 12.5 und durch die gemeinsame Auswertung dieser Messungen erkannt werden. Derartige Technologien werden klassischerweise als RAIM (Receiver Autonomous Integrity Monitoring) bezeichnet.
   In der Fig. ist das Erkennen dieser dritten Klasse von Integritätsproblemen zunächst durch Beobachten der durch die fett gedruckten und strich-punktierten Linien angedeuteten Signale verschiedener Satelliten 12.3 bis 12.5 durch eine Beobachtungsstation 14.4 angedeutet. Ferner übermittelt die Beobachtungsstation 14.4 die Messungen an die zentrale Prozessierungsstelle 16 über das Kommunikationsnetzwerk 18 für die Auswertung. Wiederum kann das dritte Erkennen von Integritätsproblemen dritter Klasse ausschließlich in der zentralen Prozessierungsstelle 16 erfolgen, oder die Erkennung kann auf die Beobachtungsstation 14.4 und zentrale Prozessierungsstelle 16 aufgeteilt sein.

Die endgültige Auswertung der erkannten Integritätsprobleme verschiedener Klassen erfolgt im Benutzerempfänger, in dem alle verschiedenen Messungen beziehungsweise die in der Prozessierungsstelle 16 abgeleitete Information über die Integrität der einzelnen Signale zum Erkennen von Integritätsproblemen zusammenlaufen. Hierzu werden in der zentralen Prozessierungsstelle 16 alle drei Erkennungsmechanismen, d.h. die Erkennungsmechanismen für die erste bis dritte Klasse von Integritätsproblemen, entsprechend einem ersten, zweiten und dritten Erkennen kombiniert eingesetzt, um eine möglichst effiziente Erkennung von Integritätsproblemen zu ermöglichen. Optional kann das Erkennen von Problemen der Klasse 2 und 3 auch nur im Benutzerempfänger durchgeführt werden. Hierbei werden Probleme, die durch einen der beiden ersten Mechanismen schon entdeckt werden können, bei der Leistungsfähigkeitsberechnung der späteren Mechanismen nur noch mit der Wahrscheinlichkeit berücksichtigt, dass sie auftreten und von einem der vorhergehenden Mechanismen nicht entdeckt worden sind. Dies reduziert die Anforderungen an den späteren Mechanismus, beziehungsweise erlaubt bei gleicher Leistungsfähigkeit des letzten Algorithmus einen hochwertigeren Integritätsdienst anzubieten.

Im Folgenden werden noch einige Details zu den verschiedenen Erkennungsmechanismen erläutert.

Beim ersten Mechanismus bzw. ersten Erkennen werden die Beobachtungen an den unterschiedlichen Beobachtungsstationen 14.1 und 14.2 immer genau dann durchgeführt, wenn eine bestimmte Instanz des Signals an der Beobachtungsstation 14.1 oder 14.2 ankommt. Dadurch wird erreicht, dass für jeden Satelliten an allen Beobachtungsstationen die gleiche Signalinstanz gemessen wird, was eine Modellierung der Veränderung des Fehlers überflüssig macht. Jede Beobachtungsstation muss nun natürlich die Messungen zu unterschiedlichen Satelliten möglicherweise zu unterschiedlichen Zeiten durchführen.

Der zweite Mechanismus bzw. das zweite Erkennen wird bisher zur Berechnung der Leistungsfähigkeit des Integritätssystems eines Satellitennavigationssystems nicht verwendet, und daher de facto auch nicht für das Integritätssystem. Messungen mit unterschiedlichen Prozessierungstechniken an einem Signal ermöglichen viele Signalfehler zu erkennen und dann solche Signale von der weiteren Verwendung auszuschließen. Von Bedeutung ist hier insbesondere, wie groß der Fehler sein muss, dass die Messung an den einzelnen Signalen solche Fehler erkennen kann und wie groß die Messungenauigkeit bei diesem Prozess ist. Diese Parameter sollten dann natürlich für die einzelnen Fehlerquellen mit den entsprechenden Wahrscheinlichkeiten bei der Integritätsrisikoberechnung berücksichtigt werden.

Der dritte Mechanismus bzw. das dritte Erkennen ist im Prinzip wie bereits oben erwähnt als RAIM bekannt. Dieser Mechanismus detektiert nun gemäß der Erfindung nur noch eine ganz beschränkte Anzahl von möglichen Fehlern, da Fehler bereits mit dem ersten und zweiten Erkennungsmechanismus detektiert wurden.

Zusammenfassend kann durch die Erfindung eine effiziente Integritätsüberwachung in einem Satellitennavigationssystem erzielt werden. Insbesondere ermöglicht es die Erfindung, bessere Integritätsdienste in einem Satellitennavigationssystem anzubieten.

### Bezugszeichen

- 10: Satellitennavigationssystem
- 12.1-12.5: Satellit
- 14.1-14-4: Beobachtungsstation
- 16: zentrale Prozessierungsstelle
- 18: Kommunikationsnetzwerk
- 20: Integritätswarnsignal
- 22: Sendeantenne für Integritätswarnsignal

## Patentansprüche

1. Verfahren zur Integritätsüberwachung von Satellitennavigationssignalen mit den folgenden Schritten:
erstes Erkennen von Integritätsproblemen, indem an verschiedenen Orten (14.1, 14.2) dieselbe Instanz eines Navigationssignals von einem bestimmten Satelliten (12.1) empfangen wird und die empfangenen Instanzen ausgewertet werden zur Schätzung des Fehlers der Instanz des Navigationssignals und zur Schätzung des Fehlers, der bei der Fehlerschätzung des Navigationssignals gemacht wird;
zweites Erkennen von Integritätsproblemen, indem eine oder mehrere Messungen eines oder mehrerer empfangener Navigationssignale von einem bestimmten Satelliten (12.2) in einem Empfänger durchgeführt werden und die mindestens eine Messung ausgewertet wird zur Schätzung von Fehlern der Navigationssignale und zur Schätzung des Fehlers, der bei der Fehlerschätzung der Navigationssignale gemacht wird; und anschließend
drittes Erkennen von Integritätsproblemen, indem Messungen von mehreren Navigationssignalen von verschiedenen Satelliten (12.3, 12.4, 12.5) in einem Empfänger durchgeführt und die Messungen ausgewertet werden zur Schätzung von Fehlern der Navigationssignale und zur Schätzung des Fehlers, der bei der Fehlerschätzung der Navigationssignale gemacht wird, **dadurch gekennzeichnet, dass** Integritätsprobleme, die bereits beim ersten und zweiten Erkennen erkannt werden können, nur mit der Wahrscheinlichkeit berücksichtigt werden, dass sie beim dritten Erkennen auftreten und beim ersten und zweiten Erkennen nicht entdeckt worden sind.

2. Verfahren nach Anspruch 1,
**dadurch gekennzeichnet, dass**
das erste Erkennen von Integritätsproblemen immer dann durchgeführt wird, wenn eine Instanz eines Navigationssignals von einem bestimmten Satelliten (12.1) von unterschiedlichen Beobachtungsstationen (14.1, 14.2) eines Satellitennavigationssystems (10) empfangen wird.

3. Verfahren nach Anspruch 1 oder 2,
**dadurch gekennzeichnet, dass**
das zweite Erkennen eine Prozessierung auf Signalebene der mindestens einen Messung in einem Empfänger für Satellitennavigationssignale umfasst.

4. Vorrichtung zur Integritätsüberwachung von
Satellitennavigationssignalen umfassend:
erste Erkennungsmittel (14.1, 14.2, 16) zum ersten Erkennen von Integritätsproblemen, wobei die ersten Erkennungsmittel ausgebildet sind, an verschiedenen Orten (14.1, 14.2) dieselbe Instanz eines Navigationssignals von einem bestimmten Satelliten (12.1) zu empfangen und die empfangenen Instanzen auszuwerten zur Schätzung des Fehlers der Instanz des Navigationssignals und zur Schätzung des Fehlers, der bei der Fehlerschätzung des Navigationssignals gemacht wird, die dann beim Nutzerempfänger mit zum Ermitteln des Integritätsrisikos verwendet wird;
zweite Erkennungsmittel (14.3, 16) zum zweiten Erkennen von Integritätsproblemen, wobei die zweiten Erkennungsmittel ausgebildet sind, eine oder mehrere Messungen eines oder mehrerer empfangener Navigationssignale von einem bestimmten Satelliten (12.2) in einem Empfänger durchzuführen und die mindestens eine Messung auszuwerten zur Schätzung von Fehlern der Navigationssignale und zur Schätzung des Fehlers, der bei der Fehlerschätzung der Navigationssignale gemacht wird, die dann beim Nutzerempfänger mit zum Ermitteln des Integritätsrisikos verwendet wird; und
dritte Erkennungsmittel (14.4, 16) zum dritten Erkennen von Integritätsproblemen, wobei die dritten Erkennungsmittel ausgebildet sind, Messungen von mehreren Navigationssignalen von verschiedenen Satelliten (12.3, 12.4, 12.5) in einem Empfänger durchzuführen und die Messungen auszuwerten zum Ermitteln des Integritätsrisikos, **dadurch gekennzeichnet, dass** die dritten Erkennungsmittel ferner derart ausgebildet sind, dass Integritätsprobleme, die bereits beim ersten und zweiten Erkennen erkannt werden können, nur mit der Wahrscheinlichkeit berücksichtigt werden, dass sie beim dritten Erkennen auftreten und beim ersten und zweiten Erkennen nicht entdeckt worden sind, wobei die Güte der Schätzung in den beiden ersten Prozessen mit zur Ermittlung des Integritätsrisikos herangezogen wird.

5. Vorrichtung nach Anspruch 4,
**dadurch gekennzeichnet, dass**
die ersten Erkennungsmittel in verschiedenen Beobachtungsstationen (14.1, 14.2) für Satellitennavigationssignale implementiert sind.

6. Vorrichtung nach Anspruch 5,
**dadurch gekennzeichnet, dass**
jede Beobachtungsstation (14.1, 14.2) derart ausgebildet ist, dass sie beim Empfangen derselben Instanz des Navigationssignals vom bestimmten Satelliten (12.1) die Instanz ausgewertet und die Auswertung an eine zentrale Prozessierungsstelle (16) übermittelt wird.

7. Vorrichtung nach Anspruch 4, 5 oder 6,
**dadurch gekennzeichnet, dass**
die zweiten Erkennungsmittel in einem Empfänger für die Satellitennavigationssignale, insbesondere einer zentralen Prozessierungsstelle (16) für Satellitennavigationssignale, implementiert sind.

8. Vorrichtung nach Anspruch 4, 5 oder 6,
**dadurch gekennzeichnet, dass**
die zweiten Erkennungsmittel in einem Empfänger für die Satellitennavigationssignale, insbesondere im Nutzerempfänger implementiert ist.

9. Vorrichtung nach Anspruch 4, 5, 6, 7, oder 8
**dadurch gekennzeichnet, dass**
die zweiten Erkennungsmittel (14.3, 16) ferner ausgebildet sind, die Auswertung der mindestens einen Messung des empfangenen Navigationssignals vom bestimmten Satelliten (12.2) durch eine Prozessierung auf Signalebene durchzuführen.

10. Vorrichtung nach Anspruch 4, 5 oder 6,
**dadurch gekennzeichnet, dass**
die dritten Erkennungsmittel in einem Empfänger für die Satellitennavigationssignale, insbesondere einer zentralen Prozessierungsstelle (16) für Satellitennavigationssignale, implementiert sind.

11. Vorrichtung nach Anspruch 4, 5, 6, 7 oder 8
**dadurch gekennzeichnet, dass**
die dritten Erkennungsmittel in einem Empfänger für die Satellitennavigationssignale, insbesondere einer zentralen Prozessierungsstelle (16) für Satellitennavigationssignale, implementiert sind.

12. Vorrichtung nach Anspruch 4, 5 oder 6,
**dadurch gekennzeichnet, dass**
die dritten Erkennungsmittel in einem Empfänger für die Satellitennavigationssignale, insbesondere im Nutzerempfänger implementiert ist.

13. Vorrichtung nach Anspruch 4, 5, 6, 7 oder 8
**dadurch gekennzeichnet, dass**
die dritten Erkennungsmittel in einem Empfänger für die Satellitennavigationssignale, insbesondere im Nutzerempfänger implementiert ist.

14. Vorrichtung nach Anspruch 4 bis 13, in der die nicht im Nutzerempfänger berechnete und/oder geschätzte Integritätsinformation über ein geeignetes Kommunikationsmedium an den Benutzerempfänger übermittelt wird.

15. Vorrichtung nach Anspruch 4 bis 14, in der die zentrale Prozessierungsstelle in jedem Satelliten oder einem Subset der Satelliten implementiert wird.

## Claims

1. Method for monitoring the integrity of satellite navigation signals, having the following steps:
first detection of integrity problems in that the same instance of a navigation signal from a specific satellite (12.1) is received at different locations (14.1, 14.2), and the received instances are evaluated in order to estimate the error in the instance of the navigation signal and to estimate the error which is made in the estimation of the error in the navigation signal;
second detection of integrity problems in that one or more measurements of one or more received navigation signals from a specific satellite (12.2) is/are carried out in a receiver and the at least one measurement is evaluated in order to estimate errors in the navigation signals and to estimate the error which is made in the estimation of the error in the navigation signals; and subsequently
third detection of integrity problems in that measurements of a plurality of navigation signals from different satellites (12.3, 12.4, 12.5) are carried out in a receiver and the measurements are evaluated in order to estimate errors in the navigation signals and to estimate the error which is made in the estimation of the error in the navigation signals, **characterized in that** the integrity problems which can already be detected as early as the first and second detections are taken into account only with the probability that they occur upon the third detection and are not detected upon the first and second detections.

2. Method according to Claim 1, **characterized in that** the first detection of integrity problems is always carried out whenever there is an instance of reception of a navigation signal from a specific satellite (12.1) by different observing stations (14.1, 14.2) of a satellite navigation system (10).

3. Method according to Claim 1 or 2, **characterized in that** the second detection comprises processing on the signal plane of the at least one measurement in a receiver for satellite navigation signals.

4. Device for monitoring the integrity of satellite navigation signals, comprising:
first detecting means (14.1, 14.2, 16) for the first detection of integrity problems, the first detecting means being designed to receive the same instance of a navigation signal from a specific satellite (12.1) at different locations (14.1, 14.2) and to evaluate the received instances in order to estimate the error in the instance of the navigation signal and to estimate the error which is made in the estimation of the error in the navigation signal, which estimation of error is then also used by the user receiver to determine the risk to integrity;
second detecting means (14.3, 16) for the second detection of integrity problems, the second detecting means being designed to carry out in a receiver one or more measurements of one or more received navigation signals from a specific satellite (12.2), and to evaluate the at least one measurement in order to estimate errors in the navigation signals and to estimate the error which is made in the estimation of the error in the navigation signals, which is then also used by the user receiver to determine the risk to integrity; and
third detecting means (14.4, 16) for the third detection of integrity problems, the third detecting means being designed to carry out in a receiver measurements of a plurality of navigation signals from different satellites (12.3, 12.4, 12.5) and to evaluate the measurements in order to determine the risk to integrity, **characterized in that** the third detecting means are furthermore designed in such a way that integrity problems which can already be detected as early as the first and second detections are taken into account only with the probability that they occur upon the third detection and are not detected upon the first and second detections, the quality of the estimation in the two first processes also being used to determine the risk to integrity.

5. Device according to Claim 4, **characterized in that** the first detecting means are implemented in different observing stations (14.1, 14.2) for satellite navigation signals.

6. Device according to Claim 5, **characterized in that** each observing station (14.1, 14.2) is designed in such a way that upon receiving the same instance of the navigation signal from the specific satellite (12.1) it evaluates the instance, and the evaluation is transmitted to a central processing point (16).

7. Device according to Claim 4, 5 or 6, **characterized in that** the second detecting means are implemented in a receiver for the satellite navigation signals, in particular a central processing point (16) for satellite navigation signals.

8. Device according to Claim 4, 5 or 6, **characterized in that** the second detecting means are implemented in a receiver for the satellite navigation signals, in particular in the user receiver.

9. Device according to Claim 4, 5, 6, 7 or 8, **characterized in that** the second detecting means (14.3, 16) are further designed to carry out the evaluation of the at least one measurement of the received navigation signal from the specific satellite (12.2) by processing on the signal plane.

10. Device according to Claim 4, 5 or 6, **characterized in that** the third detecting means are implemented in a receiver for the satellite navigation signals, in particular a central processing point (16) for satellite navigation signals.

11. Device according to Claim 4, 5, 6, 7 or 8, **characterized in that** the third detecting means are implemented in a receiver for the satellite navigation signals, in particular a central processing point (16) for satellite navigation signals.

12. Device according to Claim 4, 5 or 6, **characterized in that** the third detecting means are implemented in a receiver for the satellite navigation signals, in particular in the user receiver.

13. Device according to Claim 4, 5, 6, 7 or 8, **characterized in that** the third detecting means are implemented in a receiver for the satellite navigation signals, in particular in the user receiver.

14. Device according to Claims 4 to 13, in which the integrity information not calculated in the user receiver and/or estimated is transmitted to the user receiver via a suitable communication medium.

15. Device according to Claims 4 to 14, in which the central processing point is implemented in each satellite or a subset of the satellites.

## Revendications

1. Procédé de surveillance de l'intégrité de signaux de navigation par satellite comprenant les étapes suivantes :
première identification de problèmes d'intégrité en recevant la même instance d'un signal de navigation d'un satellite (12.1) donné en différents endroits (14.1, 14.2) et en interprétant les instances reçues en vue d'estimer l'erreur de l'instance du signal de navigation et en vue d'estimer l'erreur qui est faite lors de l'estimation de l'erreur du signal de navigation ;
deuxième identification de problèmes d'intégrité en effectuant dans un récepteur une ou plusieurs mesures d'un ou plusieurs signaux de navigation reçus d'un satellite (12.2) donné et en interprétant l'au moins une mesure en vue d'estimer les erreurs des signaux de navigation et en vue d'estimer l'erreur qui est faite lors de l'estimation de l'erreur des signaux de navigation ; et finalement
troisième identification de problèmes d'intégrité en effectuant dans un récepteur des mesures de plusieurs signaux de navigation de différents satellites (12.3, 12.4, 12.5) et en interprétant les mesures en vue d'estimer les erreurs des signaux de navigation et en vue d'estimer l'erreur qui est faite lors de l'estimation de l'erreur des signaux de navigation, **caractérisé en ce que** les problèmes d'intégrité qui peuvent déjà être identifiés lors de la première et de la deuxième identification ne sont pris en compte qu'avec la probabilité qu'ils se produisent lors de la troisième identification et n'ont pas été identifiés lors de la première et de la deuxième identification.

2. Procédé selon la revendication 1, **caractérisé en ce que** la première identification de problèmes d'intégrité est toujours exécutée lorsqu'une instance d'un signal de navigation d'un satellite (12.1) donné est reçue par des stations d'observation (14.1, 14.2) différentes d'un système de navigation par satellite (10) .

3. Procédé selon la revendication 1 ou 2, **caractérisé en ce que** la deuxième identification comprend un traitement au niveau du signal de l'au moins une mesure dans un récepteur de signaux de navigation par satellite.

4. Dispositif de surveillance de l'intégrité de signaux de navigation par satellite comprenant :
des premiers moyens d'identification (14.1, 14.2, 16) pour une première identification de problèmes d'intégrité, les premiers moyens d'identification étant configurés pour recevoir la même instance d'un signal de navigation d'un satellite (12.1) donné en différents endroits (14.1, 14.2) et pour interpréter les instances reçues en vue d'estimer l'erreur de l'instance du signal de navigation et en vue d'estimer l'erreur qui est faite lors de l'estimation de l'erreur du signal de navigation, laquelle est ensuite utilisée conjointement par le récepteur d'utilisateur en vue de déterminer le risque pour l'intégrité ;
des deuxièmes moyens d'identification (14.3, 16) pour une deuxième identification de problèmes d'intégrité, les deuxièmes moyens d'identification étant configurés pour effectuer dans un récepteur une ou plusieurs mesures d'un ou plusieurs signaux de navigation reçus d'un satellite (12.2) donné et pour interpréter l'au moins une mesure en vue d'estimer les erreurs des signaux de navigation et en vue d'estimer l'erreur qui est faite lors de l'estimation de l'erreur des signaux de navigation, laquelle est ensuite utilisée conjointement par le récepteur de l'utilisateur en vue de déterminer le risque pour l'intégrité ; et
des troisièmes moyens d'identification (14.4, 16) pour une troisième identification de problèmes d'intégrité, les troisièmes moyens d'identification étant configurés pour effectuer dans un récepteur des mesures de plusieurs signaux de navigation de différents satellites (12.3, 12.4, 12.5) et pour interpréter les mesures en vue d'estimer le risque pour l'intégrité, **caractérisé en ce que** les troisièmes moyens d'identification sont en outre configurés de telle sorte que les problèmes d'intégrité qui peuvent déjà être identifiés lors de la première et de la deuxième identification ne sont pris en compte qu'avec la probabilité qu'ils se produisent lors de la troisième identification et n'ont pas été identifiés lors de la première et de la deuxième identification, la qualité de l'estimation dans les deux premiers processus étant utilisée conjointement en vue de déterminer le risque pour l'intégrité.

5. Dispositif selon la revendication 4, **caractérisé en ce que** les premiers moyens d'identification sont mis en oeuvre dans différentes stations d'observation (14.1, 14.2) pour des signaux de navigation par satellite.

6. Dispositif selon la revendication 5, **caractérisé en ce que** chaque station d'observation (14.1, 14.2) est configurée de telle sorte que lors de la réception de la même instance du signal de navigation d'un satellite (12.1) donné, l'instance est interprétée et l'interprétation est communiquée à un poste de traitement central (16).

7. Dispositif selon la revendication 4, 5 ou 6, **caractérisé en ce que** les deuxièmes moyens d'identification sont mis en oeuvre dans un récepteur pour les signaux de navigation par satellite, notamment dans un poste de traitement central (16) pour des signaux de navigation par satellite.

8. Dispositif selon la revendication 4, 5 ou 6, **caractérisé en ce que** les deuxièmes moyens d'identification sont mis en oeuvre dans un récepteur pour les signaux de navigation par satellite, notamment dans le récepteur d'utilisateur.

9. Dispositif selon la revendication 4, 5, 6, 7 ou 8, **caractérisé en ce que** les deuxièmes moyens d'identification (14.3, 16) sont en outre configurés pour effectuer l'interprétation de l'au moins une mesure du signal de navigation reçu d'un satellite (12.2) donné par un traitement au niveau du signal.

10. Dispositif selon la revendication 4, 5 ou 6, **caractérisé en ce que** les troisièmes moyens d'identification sont mis en oeuvre dans un récepteur pour les signaux de navigation par satellite, notamment dans un poste de traitement central (16) pour des signaux de navigation par satellite.

11. Dispositif selon la revendication 4, 5, 6, 7 ou 8, **caractérisé en ce que** les troisièmes moyens d'identification sont mis en oeuvre dans un récepteur pour les signaux de navigation par satellite, notamment dans un poste de traitement central (16) pour des signaux de navigation par satellite.

12. Dispositif selon la revendication 4, 5 ou 6, **caractérisé en ce que** les troisièmes moyens d'identification sont mis en oeuvre dans un récepteur pour les signaux de navigation par satellite, notamment dans le récepteur d'utilisateur.

13. Dispositif selon la revendication 4, 5, 6, 7 ou 8, **caractérisé en ce que** les troisièmes moyens d'identification sont mis en oeuvre dans un récepteur pour les signaux de navigation par satellite, notamment dans le récepteur d'utilisateur.

14. Dispositif selon les revendications 4 à 13, **caractérisé en ce que** l'information d'intégrité calculée et/ou estimée dans le récepteur d'utilisateur est communiquée au récepteur d'utilisateur par le biais d'un moyen de communication approprié.

15. Dispositif selon les revendications 4 à 14, dans lequel le poste de traitement central est mis en oeuvre dans chaque satellite ou un sous-ensemble des satellites.
